# EUROPÄISCHE PATENTSCHRIFT

(11) **EP 1 642 157 B1**
(45) Veröffentlichungstag und Bekanntmachung des Hinweises auf die Patenterteilung: **04.03.2020**
(21) Anmeldenummer: 04739819.3
(22) Anmeldetag: 11.06.2004
(51) Int. Cl.: G01V 5/00

(54) **GERAT UND VERFAHREN ZUR UBERPRUFUNG VON GEGENSTANDEN MITTELS ELEKTROMAGNETISCHER STRAHLUNG**
DEVICE AND METHOD FOR EXAMINING OBJECTS BY MEANS OF ELECTROMAGNETIC RADIATION
APPAREIL ET PROCEDE POUR VERIFIER DES OBJETS

(30) Priorität: 05.07.2003 DE 10330521
(43) Veröffentlichungstag der Anmeldung: 05.04.2006
(73) Patentinhaber: Smiths Heimann GmbH, 65205 Wiesbaden (DE)
(72) Erfinder: HARTICK, Martin, 61231 Bad Nauheim (DE); RIES, Hermann, 65232 Taunusstein (DE)
(74) Vertreter: Greif, Thomas
(86) Internationale Anmeldenummer: PCT/EP2004/006329
(87) Internationale Veröffentlichungsnummer: WO 2005/003817

(56) Entgegenhaltungen:
- WO-A-99/66317
- DE-A- 4 406 956
- JP-A- H1 010 057
- US-A- 4 379 348
- US-A- 4 454 605
- US-A- 4 987 584
- US-A- 5 182 764
- US-A- 5 313 511
- DATABASE WPI Section EI, Week 198437 Derwent Publications Ltd., London, GB; Class S03, AN 1984-229386 XP002313227 & SE 8 207 255 A (VERICO FAB) 23. Juli 1984 (1984-07-23) -& SE 8 207 255 L (VERICO FAB) 21. Juni 1984 (1984-06-21)

## Beschreibung

### Technisches Gebiet

Die Erfindung betrifft ein Gerät und ein Verfahren zur Überprüfung von Gegenständen, insbesondere von Gepäckstücken, auf verdächtige Inhalte mittels elektromagnetischer Strahlung, insbesondere mittels Röntgenstrahlen.

Zur Kontrolle von Check-in Gepäck auf Flughäfen werden bekannterweise Geräte und Anlagen eingesetzt, von denen die Gepäckstücke mit Röntgenstrahlen auf die Anwesenheit verbotener Objekte hin untersucht werden. Sollen auch Explosivstoffe aufgespürt werden, so werden auch langsamere Geräte für eine detaillierte analytische Untersuchung eingesetzt, die beispielsweise mit dem Verfahren der Röntgenbeugung oder als Computertomograph arbeiten. Diese Geräte werden bekannterweise als zweite Stufe in eine automatische Prüfanlage integriert, wobei ihnen die in der ersten Stufe nicht als eindeutig unbedenklich erkannten Gepäckstücke zur detaillierten Überprüfung zugeführt werden.

### Stand der Technik

Eine derartige, automatisch arbeitende Prüfanlage ist in der DE 44 06 956 beschrieben. Als erste Stufe wird eine übliche Röntgen-Scanvorrichtung verwendet, die zweite Stufe arbeitet mit Röntgenbeugung oder einem Nuklearverfahren, beispielsweise nach der Neutronen-Aktivierungs-Analyse. Aus dem US-Patent 5,182,764 ist eine zweistufige Anlage bekannt, bei der als zweite Stufe ein Computertomograph eingesetzt wird. Beide Anlagen arbeiten automatisch, dazu werden die in der ersten Stufe ermittelten Positionen der nicht eindeutig geklärten Objekte in den Gepäckstücken an die zweite Stufe weitergeleitet. Außerdem offenbart die JPH1010057 ein Prüfgerät für Gepäckstücke, bei dem die Gepäckauflagefläche über eine optische Positionierhilfe verfügt.

Aufgrund ihrer Integration in einen automatischen Prüfablauf sind die Geräte für die detaillierte analytische Untersuchung in der zweiten Stufe sehr komplex. Ihre Komplexität und ihre Auslegung auf die maximale Größe eines Gepäckstücks führen zu einer sehr großen Bauweise.

### Darstellung der Erfindung

Der Erfindung liegt die Aufgabe zugrunde, ein Gerät und ein Verfahren zur Überprüfung von Gegenständen auf verdächtige Inhalte bereitzustellen, das möglichst kompakt und einfach aufgebaut ist.

Diese Aufgabe wird nach der Erfindung mit einem Gerät gemäß Anspruch 1 gelöst.

Nach der Erfindung ist das Prüfgerät so gestaltet, daß die Positionierung des zu prüfenden Gegenstands von einer Bedienperson durchgeführt wird. So läßt sich das Prüfgerät weniger komplex und raumsparender gestalten. Besonders vorteilhaft läßt sich das so gestaltete Prüfgerät bei Überprüfungen einsetzen, in denen eine Bedienungsperson bereits aus anderen Gründen involviert ist.

Die Unteransprüche enthalten bevorzugte, da besonders vorteilhafte Ausführungsformen der Erfindung:
Bevorzugt werden für die Überprüfung Röntgenstrahlen verwendet (Patentanspruch 2), die entweder als nadelförmiger Primärstrahl (Pencil beam) oder als fächerförmiger Strahl von einer Röntgenquelle ausgeblendet werden (Patentansprüche 3, 4).

In dem vorteilhaften Gerät nach den Ansprüchen 5 bis 7 werden zur Überprüfung gebeugte Röntgenstrahlen ausgewertet. Dabei wird entweder die Energieverteilung gebeugter Strahlung mittels entsprechend ausgerichteter Detektoren in festgelegten Winkeln untersucht (Patentanspruch 6), oder von monochromatischer Röntgenstrahlung wird die Winkelverteilung ermittelt (Patentanspruch 7)

Als Positionierhilfe ist ein Fadenkreuz oder ein optischer Rahmen, nach Patentanspruch 8 besonders geeignet. Das Ergebnis der Auswertung wird nach Patentanspruch 9 der Bedienungsperson mit einer Anzeigeeinrichtung angezeigt, die aus einem Display oder einer Lampenanzeige besteht.

Die Patentansprüche 10 bis 14 enthalten besonders vorteilhafte Überprüfungsverfahren unter Verwendung eines Prüfgerätes gemäß den Ansprüchen 1 bis 9.

In der einfachsten Form wird das Prüfgerät allein zur Überprüfung von Gegenständen eingesetzt (Patentanspruch 10). Besonders vorteilhaft läßt es sich mit einem konventionellen Röntgengerät kombinieren (Patentansprüche 13, 14).

### Kurze Beschreibung der Zeichnung

Nachfolgend wird die Erfindung anhand eines vereinfacht dargestellten Ausführungsbeispiels näher erläutert:

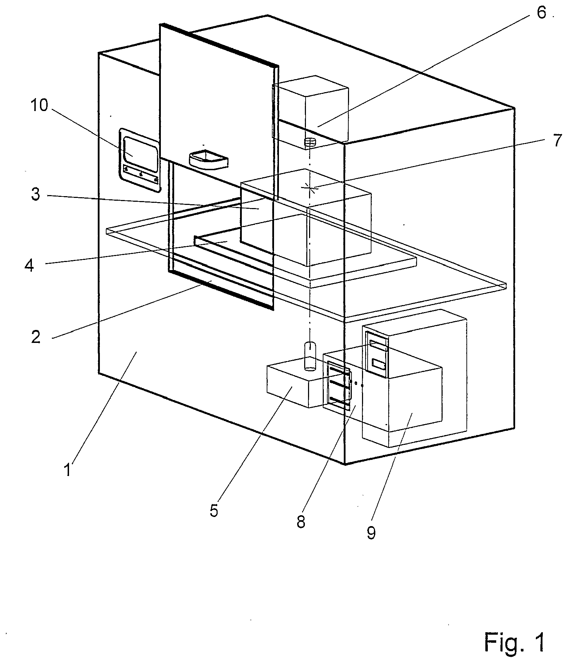

Figur 1 zeigt den prinzipiellen Aufbau eines Prüfgerätes nach der Erfindung.
Figur 2 zeigt eine Prüfanlage, bei der das Prüfgerät als 2. Stufe integriert ist.

### Wege zur Ausführung der Erfindung

Das Prüfgerät und die Prüfanlage nach dem Ausführungsbeispiel werden zur Kontrolle von Gepäck auf Flughäfen oder beim Zoll eingesetzt, um die Gepäckstücke auf die Anwesenheit verbotener Objekte, beispielsweise von Explosivstoffen, zu untersuchen.

Das Prüfgerät enthält ein Gehäuse 1 mit einer verschließbaren Öffnung 2, durch die ein zu prüfender Gegenstand 3, beispielsweise ein Gepäckstück selbst oder ein Objekt aus dem Gepäckstück, beispielsweise ein Kunst- oder Gebrauchsgegenstand mit einem Hohlraum, zur Überprüfung eingelegt werden kann. Innerhalb des Gehäuses 1 befindet sich eine Aufnahme 4, auf die der Gegenstand 3 aufgelegt wird. Eine ortsfeste oder verschiebbare Quelle 5 für elektromagnetische Strahlen, bevorzugt eine Röntgenquelle, und eine zugeordnete Detektoranordnung 6 sind so in dem Gehäuse angeordnet, daß sich der Untersuchungsbereich oberhalb der Aufnahme 4 befindet. Das Gerät enthält eine Positionierhilfe 7, die den Untersuchungsbereich anzeigt und es einer Bedienperson ermöglicht, den zu prüfenden Gegenstand 3 so auf die Aufnahme 4 zu legen, daß der verdächtige Bereich innerhalb des Gegenstands 3 geprüft wird.

Erfindungsgemäß ist die Positionierhilfe 7 als optische Anzeige gestaltet, insbesondere als Fadenkreuz oder als optischer Rahmen, welche auf die Aufnahme 4 projiziert, der Bedienungsperson den Untersuchungsbereich und die Untersuchungsrichtung anzeigt.

Weiterhin enthält das Prüfgerät eine Auswerteeinheit 8 mit einem Computer 9, von der die von der Detektoranordnung 6 gemessenen Strahlungsintensitäten im Hinblick auf verdächtige Stoffe ausgewertet werden. Das Ergebnis der Auswertung wird von einer Anzeigeeinrichtung 10 der Bedienperson angezeigt. In der einfachsten Form besteht die Anzeigeeinrichtung 10 aus einer Lampenanzeige mit beispielsweise einer roten und einer grünen Lampe, die entsprechend dem Auswerteergebnis aufleuchten. Alternativ kann als Anzeigeeinrichtung 10 ein Display vorhanden sein, das der Bedienperson anzeigt, ob verbotene Inhalte detektiert wurden oder nicht.

Zur Überprüfung der Gegenstände 3 können verschiedene physikalische Verfahren verwendet werden. Die Quelle 5 für elektromagnetische Strahlen und die zugeordnete Detektoranordnung 6 sind jeweils von dem verwendeten Verfahren abhängig gestaltet:
Bevorzugt erfolgt die Überprüfung durch Auswertung gebeugter Röntgenstrahlung. Dabei ist es möglich, entweder die Energieverteilung polychromatischer Röntgenstrahlung mittels winkelsensitiver Detektoren 6 in einem oder mehreren festgelegten Winkeln zu untersuchen (energiedispersives Verfahren), oder die Winkelverteilung gebeugter monochromatischer Röntgenstrahlen wird ermittelt (winkeldispersives Verfahren). Aufgrund der Schwierigkeiten, monochromatische Röntgenstrahlen mit ausreichender Intensität zu erzeugen, wird die erste Variante bevorzugt.

Die zur Untersuchung dienende Röntgenstrahlung wird auf bekannte Weise entweder als ein im wesentlichen nadelförmiger Primärstrahl (Pencil beam) oder als Röntgenstrahlen in einer fächerförmigen Strahlenebene von einer Röntgenquelle ausgeblendet. Bei dem energiedispersiven Verfahren nach dem Ausführungsbeispiel wird ein Pencil beam ausgeblendet und auf den zu prüfenden Gegenstand 3 gerichtet. Die Detektoranordnung 6 enthält Detektoren mit vorgeschalteten Kollimatoren, die ausschließlich gebeugte Strahlung in dem festgelegten Winkel empfangen. In der einfachsten Form wird nur ein einziger Winkel festgelegt. Zusätzlich sind die Detektoren in Richtung der Ausgangsstrahlung verstellbar gelagert, damit der Gegenstand 3 über seine gesamte in Richtung der Ausgangsstrahlung gemessene Höhe untersucht werden kann. Alternativ können auch mehrere im Winkel festgelegte Detektoren ortsfest so angeordnet sein, daß in jeder Höhe geprüft werden kann.

Um in verschiedenen Richtungen prüfen zu können, sind nach einer anderen Ausführungsform die Röntgenquelle 5 mit der Detektoranordnung 6 gemeinsam relativ zur Auflage 4 verstell- oder verdrehbar.

Zur Bestimmung der Energieverteilung unter einem festgelegten Winkel werden Detektoren eingesetzt, die das Energiespektrum der einfallenden Strahlung analysieren. Diese energiedispersiven Detektoren lassen sich auch vorteilhaft in einem Array anordnen, um ein winkelabhängiges Energiespektrum aufzunehmen.

Ein Detektorarray wird auch bei dem winkeldispersiven Verfahren mit monochromatischer Röntgenstrahlung eingesetzt.

Als Alternative zur Auswertung von gebeugter Röntgenstrahlung kann auch eine Absorptionsmessung, insbesondere mit dem bekannten Dual-Energy-Verfahren durchgeführt werden, oder es werden vom Gegenstand 3 reflektierte elektromagnetische Wellen im Mikrometer-Bereich ausgewertet. Sowohl die Röntgenquelle 5 als auch die Detektoranordnung 6 sind dann diesem Verfahren entsprechend gestaltet. Die Auswertung von gebeugter Röntgenstrahlung wird jedoch bevorzugt, da diese sich besonders zur Detektion von Explosivstoffen eignet.

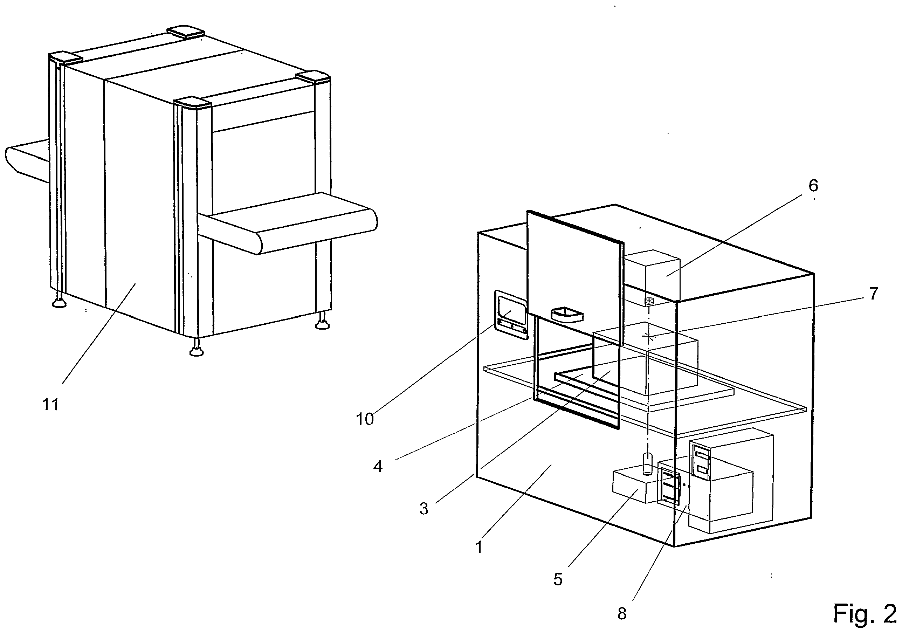

Wie in Figur 2 dargestellt, läßt sich das Prüfgerät besonders vorteilhaft mit einem konventionellen Prüfgerät 11, das mit einem auf Absorption von Röntgenstrahlen beruhenden Prüfungsverfahren prüft, zu einer zweistufigen Anlage kombinieren. Es ist jedoch auch möglich, das Prüfgerät als autonomes Gerät einzusetzen, um verdächtige Objekte lokal oder stichprobenartig zu untersuchen. In einer zweistufigen Anlage, dient das Prüfgerät als zweite Stufe dazu, in dem Prüfgerät 11 der ersten Stufe als nicht sicher unverdächtig bestimmte Gegenstände 3 detaillierter zu untersuchen.

Nachfolgend wird ein beispielhafter Untersuchungsprozess am Flughafen oder Zoll mit der Anlage nach Figur 2 beschrieben:
Die Bedienperson untersucht einen Gegenstand 3 (Handtasche, Computer, o.ä.) mit dem konventionellen Röntgengerät 11 der ersten Stufe und entdeckt ein nicht identifizierbares oder verdächtiges Objekt. Dieses könnte z. B. auch eine Substanz im Hohlraum eines Kunstgegenstandes sein. Die Bedienperson kennt aufgrund dieser Voruntersuchung die Position des verdächtigen Objektes im Gegenstand 3 und legt diesen Gegenstand 3 dann so auf die Aufnahme 4 im Prüfgerät, daß zumindest eine Koordinate des Objektes in dem durch die Positionierhilfe 7 (z. B. durch einen Rahmen oder ein Fadenkreuz) optisch gekennzeichneten Untersuchungsbereich zu liegen kommt. Das Gehäuse 1 wird anschließend geschlossen und das Prüfgerät untersucht die Position oder eine Reihe von Positionen aufgrund der noch offen gelassenen Koordinaten automatisch.

Das Prüfgerät nimmt dabei ein oder mehrere Datensätze auf, die beispielsweise in Form von Spektren darstellbar sind, und wertet diese automatisch aus. Das Auswerteergebnis wird der Bedienperson in der Anzeige 10 angezeigt. Beispielsweise wird das Ergebnis über eine symbolische Anzeige (z. B. rote/grüne Lampe für verdächtig/unverdächtig) oder über ein Display schriftlich angezeigt.

Danach oder schon während der Auswertung kann die Bedienperson den Gegenstand 3 wieder entnehmen oder eine weitere Position untersuchen

## Patentansprüche

1. Gerät zur Überprüfung von Gegenständen (3), insbesondere von Gepäckstücken, auf verdächtige Inhalte mittels elektromagnetischer Strahlung mit
- einem Gehäuse (1) mit einer Auflage (4) und einer verschließbaren Öffnung (2), durch die ein zu prüfender Gegenstand auf die Auflage (4) gelegt werden kann,
- einer Quelle (5) für elektromagnetische Strahlung und einer zugeordneten Detektoranordnung (6), die in dem Gehäuse (1) so angeordnet sind, dass sich der Untersuchungsbereich oberhalb der Auflage (4) befindet,
- einer optischen, auf die Auflage (4) projizierenden Positionierhilfe (7), die einer Bedienungsperson den Untersuchungsbereich anzeigt, wobei der Untersuchungsbereich der zu prüfende Bereich mit einem verdächtigen Inhalt innerhalb des Gegenstandes (3) ist,
- und einer Auswerteeinheit (8) mit einem Computer (9), von der die von der Detektoranordnung (6) gemessenen Strahlungsintensitäten im Hinblick auf verdächtige Stoffe ausgewertet werden.

2. Gerät nach Anspruch 1, **dadurch gekennzeichnet, daß** die Quelle (5) für elektromagnetische Strahlung eine Röntgenquelle ist.

3. Gerät nach Anspruch 2, **dadurch gekennzeichnet, daß** zur Untersuchung ein im wesentlichen nadelförmiger Primärstrahl (Pencilbeam) von einer Röntgenquelle (5) ausgeblendet wird.

4. Gerät nach Anspruch 2, **dadurch gekennzeichnet, daß** zur Untersuchung Röntgenstrahlen in einer fächerförmigen Strahlenebene von einer Röntgenquelle (5) ausgeblendet werden.

5. Gerät nach einem der Ansprüche 2 bis 4, **dadurch gekennzeichnet, daß** zur Überprüfung vom Gegenstand (3) gebeugte Röntgenstrahlen detektiert werden.

6. Gerät nach Anspruch 5, **dadurch gekennzeichnet, daß** die Energieverteilung gebeugter Strahlung in einem oder mehreren festgelegten Winkeln untersucht wird.

7. Gerät nach Anspruch 5, **dadurch gekennzeichnet, daß** die Winkelverteilung gebeugter monochromatischer Strahlung untersucht wird.

8. Gerät nach einem der Ansprüche 1 bis 7, **dadurch gekennzeichnet, daß** die Positionierhilfe (7) ein Fadenkreuz oder ein optischer Rahmen ist.

9. Gerät nach einem der Ansprüche 1 bis 8, **gekennzeichnet durch** eine Einrichtung (10) zur Anzeige des Auswerteergebnisses, insbesondere ein Display oder eine Lampenanzeige.

10. Verfahren zur Überprüfung von Gegenständen (3), insbesondere von Gepäckstücken, auf verdächtige Inhalte, **dadurch gekennzeichnet, daß** eine Bedienperson den Gegenstand (3) zur Prüfung in ein Prüfungsgerät gemäß einem der Patentansprüche 1 bis 9 einlegt und auf der Auflage (4) so positioniert, daß sich der Bereich des verdächtigen Inhalts zumindest teilweise im Untersuchungsbereich befindet, anschließend eine Prüfung durchgeführt wird, und danach das Prüfungsergebnis der Bedienperson angezeigt wird.

11. Verfahren nach Anspruch 10, **dadurch gekennzeichnet, daß** zur Prüfung des verdächtigen Inhalts gebeugte Röntgenstrahlen ausgewertet werden.

12. Verfahren nach Anspruch 10 bis 11, **dadurch gekennzeichnet, daß** die Prüfung wiederholt mit jeweils veränderter Position des Gegenstands (3) durchgeführt wird.

13. Verfahren nach einem der Ansprüche 10 bis 12 mit folgenden Verfahrensschritten:
a) Der Gegenstand (3) wird in einer ersten Stufe mit einem auf der Absorption von Röntgenstrahlung beruhenden Prüfungsverfahren geprüft,
b) von einem in der ersten Stufe nicht als unverdächtig identifizierbaren Objekt (= verdächtiges Objekt) wird die Position bestimmt und einer Bedienperson angezeigt,
c) die Bedienperson legt den Gegenstand (3) zur Prüfung in einer zweiten Stufe in ein Prüfungsgerät gemäß einem der Patentansprüche 1 bis 9 ein und positioniert es auf der Auflage (4) so, daß sich das verdächtige Objekt zumindest teilweise im Untersuchungsbereich befindet,
d) anschließend wird das verdächtige Objekt in dem zweiten Prüfgerät erneut Geprüft.

14. Anlage zur Überprüfung von Gegenständen (3), insbesondere von Gepäckstücken, auf verdächtige Inhalte, mit einem ersten Prüfgerät, das nicht absorbierte Röntgenstrahlen aus zumindest einer Röntgenquelle auswertet, und einem nachfolgend angeordneten zweiten Prüfgerät gemäß einem der Ansprüche 1 bis 9.

## Claims

1. Device for checking objects (3), in particular pieces of luggage, for suspicious contents using electromagnetic radiation, having
- a housing (1) having a support (4) and a closable opening (2), through which an object to be tested can be placed on the support (4),
- a source (5) of electromagnetic radiation and an associated detector arrangement (6), which are arranged in the housing (1) such that the examination region is situated above the support (4),
- an optical positioning aid (7), which projects onto the support (4) and indicates the examination region to an operator, wherein the examination region is the region to be tested having a suspicious content within the object (3),
- and an evaluation unit (8) having a computer (9), which evaluates the radiation intensities measured by the detector arrangement (6) in view of suspicious substances.

2. Device according to Claim 1, **characterized in that** the source (5) of electromagnetic radiation is an X-ray source.

3. Device according to Claim 2, **characterized in that** a substantially needle-shaped primary beam (pencil beam) is defined by an X-ray source (5) for examination purposes.

4. Device according to Claim 2, **characterized in that** X-rays in a fan-type beam plane are defined by an X-ray source (5) for examination purposes.

5. Device according to one of Claims 2 to 4, **characterized in that** X-rays that have been diffracted by the object (3) are detected for examination purposes.

6. Device according to Claim 5, **characterized in that** the energy distribution of diffracted radiation is examined in one or more fixed angles.

7. Device according to Claim 5, **characterized in that** the angle distribution of diffracted monochromatic radiation is examined.

8. Device according to one of Claims 1 to 7, **characterized in that** the positioning aid (7) is crosshairs or an optical frame.

9. Device according to one of Claims 1 to 8, **characterized by** an apparatus (10) for displaying the evaluation result, in particular a display or a lamp indicator.

10. Method for checking objects (3), in particular pieces of luggage, for suspicious contents, **characterized in that** an operator places the object (3) for testing purposes into a test device according to one of Claims 1 to 9 and positions it on the support (4) such that the region of the suspicious content is located at least partially within the examination region, a test is subsequently performed, and the result of the test is then displayed to the operator.

11. Method according to Claim 10, **characterized in that** diffracted X-rays are evaluated for testing the suspicious content.

12. Method according to Claim 10 to 11, **characterized in that** the test is performed repeatedly with a respectively changed position of the object (3).

13. Method according to one of Claims 10 to 12, having the following method steps:
a) the object (3) is tested in a first stage using a test method based on the absorption of X-rays,
b) the position of an object that has been unable to be identified as not suspicious in the first stage (= suspicious object) is determined and displayed to an operator,
c) the operator places the object (3) for testing purposes in a second stage into a test device according to one of Claims 1 to 9 and positions it on the support (4) such that the suspicious object is located at least partially within the examination region,
d) the suspicious object is subsequently tested again in the second test device.

14. System for checking objects (3), in particular pieces of luggage, for suspicious contents, having a first test device, which evaluates unabsorbed X-rays from at least one X-ray source, and a second test device arranged downstream according to one of Claims 1 to 9.

## Revendications

1. Appareil pour contrôler des objets (3), notamment des colis, en vue de détecter des contenus suspects à l'aide d'un rayonnement électromagnétique, comprenant
- un boîtier (1) muni d'un appui (4) et d'une ouverture (2) pouvant être fermée et à travers laquelle un objet à contrôler peut être déposé sur l'appui (4),
- une source (5) de rayonnement électromagnétique et un arrangement détecteur (6) associé, lesquels sont disposés dans le boîtier (1) de telle sorte que la zone d'analyse se trouve au-dessus de l'appui (4),
- une aide au positionnement (7) projetée sur l'appui (4), laquelle indique la zone d'analyse à un opérateur, la zone d'analyse étant la zone à contrôler avec un contenu suspect à l'intérieur de l'objet (3),
- et une unité d'interprétation (8) pourvue d'un ordinateur (9), par laquelle les intensités de rayonnement mesurées par l'arrangement détecteur (6) sont interprétées en vue d'y déceler des substances suspectes.

2. Appareil selon la revendication 1, **caractérisé en ce que** la source (5) de rayonnement électromagnétique est une source de rayons X.

3. Appareil selon la revendication 2, **caractérisé en ce qu'**en vue de l'analyse, un rayon primaire sensiblement en forme d'aiguille (faisceau étroit) est collimaté par une source de rayons X (5).

4. Appareil selon la revendication 2, **caractérisé en ce qu'**en vue de l'analyse, des rayons X dans un plan de rayonnement en forme d'éventail sont collimatés par une source de rayons X (5).

5. Appareil selon l'une des revendications 2 à 4, **caractérisé en ce qu'**en vue du contrôle, des rayons X diffractés par l'objet (3) sont détectés.

6. Appareil selon la revendication 5, **caractérisé en ce que** la distribution d'énergie du rayonnement diffracté est analysée dans un ou plusieurs angles définis.

7. Appareil selon la revendication 5, **caractérisé en ce que** la distribution angulaire d'un rayonnement monochromatique diffracté est analysée.

8. Appareil selon l'une des revendications 1 à 7, **caractérisé en ce que** l'aide au positionnement (7) est un réticule ou un cadre optique.

9. Appareil selon l'une des revendications 1 à 8, **caractérisé par** un dispositif (10) destiné à afficher le résultat de l'interprétation, notamment un afficheur ou un indicateur lumineux.

10. Procédé pour contrôler des objets (3), notamment des colis, en vue de détecter des contenus suspects, **caractérisé en ce que**
un opérateur dépose l'objet (3) en vue du contrôle dans un appareil de contrôle selon l'une des revendications 1 à 9 et le positionne sur l'appui (4) de telle sorte que la zone du contenu suspect se trouve au moins partiellement dans la zone d'analyse, après quoi un contrôle est effectué et ensuite le résultat du contrôle est indiqué à l'opérateur.

11. Procédé selon la revendication 10, **caractérisé en ce que** des rayons X diffractés sont interprétés en vue du contrôle du contenu suspect.

12. Procédé selon les revendications 10 à 11, **caractérisé en ce que** le contrôle est réalisé de manière répétitive avec une position respectivement modifiée de l'objet (3).

13. Procédé selon l'une des revendications 10 à 12, comprenant les étapes de procédé suivantes :
a) dans une première étape, l'objet (3) est contrôlé avec un procédé de contrôle s'appuyant sur l'absorption des rayons X,
b) la position d'un objet qui, dans la première étape, ne peut pas être identifié comme non suspect (= objet suspect) est définie et indiquée à un opérateur,
c) dans une deuxième étape, l'opérateur dépose l'objet (3) en vue du contrôle dans un appareil de contrôle selon l'une des revendications 1 à 9 et le positionne sur l'appui (4) de telle sorte que l'objet suspect se trouve au moins partiellement dans la zone d'analyse,
d) l'objet suspect est ensuite une nouvelle fois contrôlé dans le deuxième appareil de contrôle.

14. Système pour contrôler des objets (3), notamment des colis, en vue de détecter des contenus suspects, comprenant un appareil de contrôle qui interprète les rayons X non absorbés en provenance d'au moins une source de rayons X, et un deuxième appareil de contrôle selon l'une des revendications 1 à 9 disposé à la suite.
